Europäisches Patentamt

European Patent Office

Office européen des brevets

(11) Publication number: **0 335 045**
**A1**

# EUROPEAN PATENT APPLICATION

(21) Application number: 88400807.9

(51) Int. Cl.⁴: **G01P 13/02**

(22) Date of filing: 01.04.88

(43) Date of publication of application:
**04.10.89 Bulletin 89/40**

(84) Designated Contracting States:
**DE FR GB**

(71) Applicant: **GRUMMAN AEROSPACE CORPORATION**
**South Oyster Bay Road**
**Bethpage, NY 11714(US)**

(72) Inventor: **Meyer, Rudolph C.**
**2229 Via La Brea**
**Palos Verdes Estates California 90274(US)**

(74) Representative: **Lerner, François**
**5, rue Jules Lefèbvre**
**F-75009 Paris(FR)**

(54) **Flow measurement device utilizing force transducers.**

(57) A missile-shaped body (22) is calibrated to determine characteristic influence coefficients. Thereafter, the body (22) is positioned in a flow field where normal forces and pitch moments are measured. Due to the fact that influence coefficients are predetermined as a result of calibration, the force and moment measurements are used to solve equations for flow field angularity.

FIG. 2

EP 0 335 045 A1

## FLOW MEASUREMENT DEVICE UTILIZING FORCE TRANSDUCERS

### RIGHTS OF THE GOVERNMENT

The Government has rights in this invention pursuant to Contract No. F33615-82-C-3007 awarded by the Department of the Air Force.

### FIELD OF THE INVENTION

The present invention relates to flow measurement devices, and more particularly to a flow direction instrument utilizing force transducers.

### BACKGROUND OF THE INVENTION

In a host of applications, flow direction measurements are necessary. For example, aboard modern fighter aircraft, it is necessary to measure angle of attack that conventionally involves the utilization of a vane which is responsive to air streams across its surface for sensing angle of attack. Similar vane instruments are employed in other airflow measurements such as wind direction and hydraulic flow.

Although such devices often operate satisfactorily, their mechanical nature involves inherent disadvantages. One of these disadvantages is the inherent problem of unreliability in adverse environments. Minor deterioration in mechanical components will adversely affect the data being generated by vane instruments. Further, such vane instruments are exceedingly sensitive to turbulence or extraneous air streams in the vicinity where they are mounted so as to sense flow components that are not of interest. An additional disadvantage is the lag time for responding to quick changes in flow direction.

### BRIEF DESCRIPTION OF THE PRESENT INVENTION

The present invention corrects the aforementioned disadvantages and may be utilized in a wide variety of flow measurements, including air and liquid environments.

Rather than relying upon mechanical vane transducers, the present invention utilizes electric strain gauges for reacting to forces imposed upon an instrument body positioned in a fluid stream for which flow direction is to be measured. Accordingly, the present instrumentation offers the advantage of highly reliable and rapidly responsive electronics for sensing changes in flow direction.

In the specific application where the present invention is to be employed as a flow direction measuring device for a fighter aircraft or missile, it may be easily fastened to the fuselage of such a vehicle for providing more dependable and precise data than is available with the prior-discussed conventional vane devices.

### BRIEF DESCRIPTION OF THE FIGURES

The above-mentioned objects and advantages of the present invention will be more clearly understood when considered in conjunction with the accompanying drawings, in which:

FIG. 1 is a schematic representation of a calibration test set-up for determining influence coefficients for an ogive body;

FIG. 2 is a partial cross-sectional schematic representation of a flow field angularity measurement device constituting the present invention.

2

## DETAILED DESCRIPTION OF THE PRESENT INVENTION

The fundamental assumption underlying the present invention is that an ogive cylinder's (missile-shape) normal force and moment in a nonuniform flow can be correlated with the angle-of-attack distribution along the length of the cylinder. Assume that the ogive cylinder in question is conceptually divided into "N" equal length segments extending from the nose to the base. The normal force coefficient, $C_N$ and moment coefficient, $C_m$, for the ogive cylinder body in a nonuniform flow field is related to the angle-of-attack distribution along the ogive cylinder body as follows:

$$C_N = \sum_{i=1}^{N} A_i (\alpha - \alpha_0)_i \qquad (1)$$

$$C_m = \sum_{i=1}^{N} B_i (\alpha - \alpha_0)_i + C_{mo} \qquad (2)$$

where
$C_N$ = normal force coefficient for ogive cylinder defined as:

$$C_N = \frac{(Normal\ Force\ acting\ on\ ogive\ cylinder)}{(dynamic\ pressure\ of\ the\ ambient\ flow)\ x\ (Reference\ area\ S)}$$

$$Cm = \frac{(Moment\ acting\ on\ ogive\ cylinder)}{(dynamic\ pressure\ of\ the\ ambient\ flow)\ x\ (s)\ x\ (Reference\ length\ d)}$$

$S$ = a reference area, usually selected to be the ogive cylinder cross-sectional area;
$d$ = a reference length, usually selected to be the ogive cylinder diameter;
$A_i$ = $C_N$ influence coefficient for $i^{th}$ element;
$B_i$ = $C_m$ influence coefficient for $i^{th}$ element;
$\alpha_i$ = local $\alpha$ (flow angle) at $i^{th}$ element;
$\alpha_0$ = isolated $\alpha$ for zero lift;
$C_{mo}$ = isolated zero lift pitching moment.

If the intended application is to measure flow direction in situations where the flow angularity does not change significantly over the length of the ogive cylinder, then the ogive cylinder need only be divided into one length element, i.e., N = 1. If the intended application is to measure flow direction in situations where the flow angularity varies significantly over the length of the ogive cylinder, then the ogive cylinder may be considered to be divided into N elements (where N > 1 up to a maximum of approximately L/d where L = the ogive cylinder length and d = the diameter).

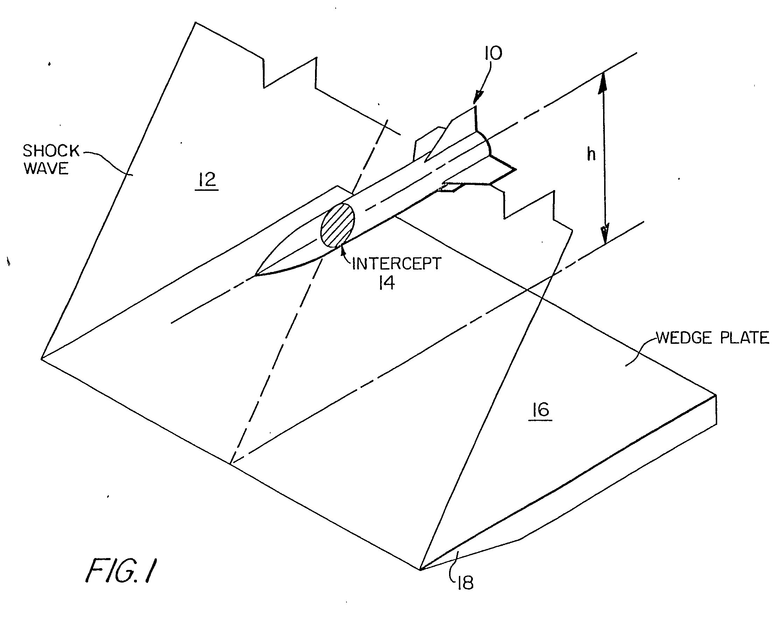

The influence coefficients are determined by the particular contour of an ogive cylinder. At supersonic speeds, the influence coefficients A and B can be determined experimentally by traversing an ogive cylinder through an oblique shock wave generated by a wedged plate, as shown in FIG. 1. The calibration test set-up in FIG. 1 illustrates the ogive cylinder generally indicated by reference numeral 10 encountering oblique shock wave 12 through an angled intercept intersection 14. The shock wave may be generated employing an inclined surface 18, for example the extended plate 16 with a wedge leading edge.

Each of the $i_{th}$ elements indicated for the above equations represents a distance along the length of the ogive cylinder and, as will be appreciated from the equations, the influence coefficients vary as a function of such distance elements. The flow angle alpha for purposes of calibration represents the flow angle as determined by the shock wave.

In order to calculate influence coefficients from the above equations, $C_N$ and $C_m$ may be expressed as follows:
$C_N = N/qs \qquad (3)$
$C_m = m/qsd \qquad (4)$

3

$q = \rho v^2/2$ = ambient flow dynamic pressure    (5)

where

M is the magnitude of the measured movement;

N is the magnitude of the measured force;

s is equal to the selected reference area;

d is equal to the selected reference length;

$\rho$ is equal to density of air;

v is equal to the relative velocity of ogive cylinder 10 (FIG. 1).

As a result of calibration, since the flow angularity $\alpha$ and the normal force N and moment m are known, the influence coefficients $A_i$ and $B_i$ can be determined. The influence coefficients $A_i$ and $B_i$ can also be determined by theoretical analysis for some simple instrument body shapes such as the ogive cylinder example discussed above.

The known influence coefficients, in conjunction with normal force and moment data may then be used for solving equations (1) and (2) for alpha when the ogive cylinder is subjected to a "real world" fluid flow of unknown angularity. Thus, once an ogive cylinder has been calibrated, it may be utilized to detect flow angle as is presently done by the less advantageous mechanical vanes previously discussed.

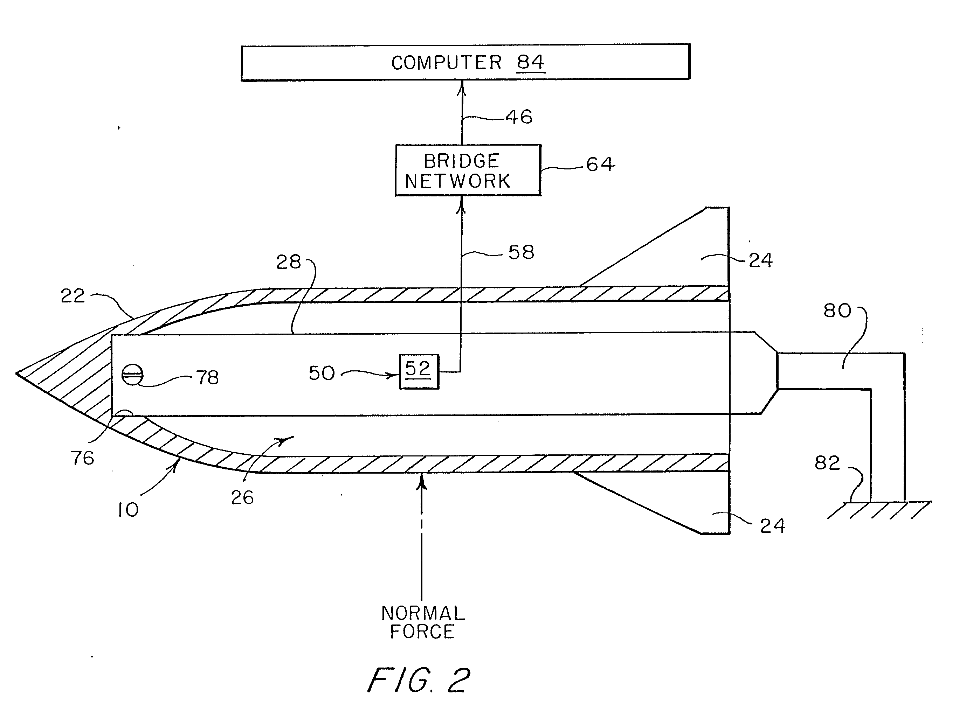

In order to measure normal force and pitching moment at various distances along the length of an ogive cylinder, the cylinder is equipped with strain gauge instrumentation as illustrated in FIG. 2.

The ogive cylinder 10 includes a hollowed fuselage 22 and rear fins 24. An axially positioned and rod-like strain gauge assembly 28 extends longitudinally along the length of the fuselage 22 and creates an annular space 26 between the strain gauge assembly and confronting surface of fuselage 22. The strain gauge assembly 28 is supported at only the front and rear ends thereof to the fuselage 22.

As indicated in FIG. 2, the strain gauge assembly comprises a conventional five-component strain gauge balance 52 located at a central point 50 along the length of fuselage 22. This single centrally located strain gauge feeds its output signals along line 58 to a bridge network 64. The output signals from the bridge network, along line 46, measure pitch, roll and yawing moments as well as normal and side forces allowing determination of flow angularity in the longitudinal and lateral planes of the cylinder, as well as the swirl angle associated with the rolling moment measurement.

The forward end of the rod-like strain gauge body 28 is received within a cylindrical recess 76 formed within the fuselage 22 and is appropriately fastened thereto by fasteners 78. The rear end of the strain gauge body 28 is supported by means of an L-shaped bracket 80, or the like, to a fixed surface 82.

When the device shown in FIG. 2 is to be employed as a flow direction instrument, it is positioned in a flow stream and readings are taken at the output of bridge network 64. The data generated by the bridge network is fed to a conventional computer 84 for solving equations (1) and (2) for flow field angularity alpha.

In the event that the device shown in FIG. 2 is to be employed as an angle of attack sensor for fighter aircraft or missiles, the device would be mounted at 82 to the fuselage of the fighter aircraft or missile. In such a situation, solution of equations (1) and (2) for $\alpha$ will yield the angle of attack. In this application the primary five-component strain gauge balance that measures the aerodynamic force and moment acting on the instrument body external shell would be complemented by another five-component strain gauge balance that measures the acceleration forces and moments on an internally mounted reference mass having inertia characteristics similar to the external instrument body. These acceleration forces and moments would be used to correct the primary balance measurements to compensate them for the acceleration forces experienced by the external instrument shell.

It is to be understood that the present invention is intended to have general applicability to flow field angularity measurement in a wide variety of fluids, including air and other gases as well as liquid flow streams. Also, the invention is not limited to the exact details of construction shown and described herein, for obvious modifications will occur to persons skilled in the art. For example, bodies other than ogive cylinders may be employed as long as they have a generally aerodynamic shape and their influence coefficients are determinable.

## Claims

1. A flow direction sensor comprising:

an aerodynamic body characterized by predetermined influence coefficients dependent upon the shape of the body;

a strain gauge assembly located within the body for measuring forces and moments when the body is subjected to a flow field;
thereby enabling the calculation of flow angle as a function of the influence coefficients.

2. A fluid flow direction system comprising:
an aerodynamic body characterized by predetermined influence coefficients dependent upon the shape of the body;
an elongated strain gauge assembly located within the body for measuring forces and moments when the body is subjected to a flow field;
circuit means connected for producing electrical signals dependent upon the force and moment encountered;
means connected to the circuit means for computing fluid flow angularity as a function of the encountered forces and moments on the body.

3. The structure set forth in claim 2 wherein the body is generally an ogive cylinder having a hollowed interior for receiving the strain gauge assembly.

4. The structure set forth in claim 3 wherein the strain gauge assembly comprises a normal force and pitching moment gauge and, as required, a side force and yawing moment gauge.

5. The structure set forth in claim 4 wherein the strain gauge assembly includes a first end fixed within the interior of the body, and an opposite end suspended within the interior.

6. The structure set forth in claim 5 wherein the circuit means comprises a bridge network having separate inputs connected to the respective strain gauge members.

7. A method for determining fluid flow direction, the steps comprising:
determining the influence coefficients along distance elements of a body, having preselected aerodynamic shape, in response to a flow field angle and measurable forces and moments exerted on the instrument body during calibration;
subjecting a body of the same shape to an actual flow field to be measured;
measuring the force and moment encountered on the body as a result of the fluid flow across the body; and determining the flow field angle as a function of the influence coefficients as well as the measured forces and moments.

8. The method set forth in claim 7 wherein the body is generally an ogive cylinder and the measuring of forces and moments is achieved by the steps:
extending a strain gauge assembly within the body, the gauge being secured at a first end thereof within the body, an opposite end thereof being suspended within the body; and
connecting the strain gauge members to a bridge network which outputs measure the force and moment on the body.

9. The method set forth in claim 7 wherein the flow field angle is determined from the relationships:

$$C_N = \sum_{i=1}^{N} A_i \, (\alpha - \alpha_0)_i \tag{1}$$

$$C_m = \sum_{i=1}^{N} B_i \, (\alpha - \alpha_0)_i + C_{mo} \tag{2}$$

where
$A_i$ = $C_N$ influence coefficient for $i^{th}$ element;
$B_i$ = $C_m$ influence coefficient for $i^{th}$ element;
$\alpha_i$ = local $\alpha$ (flow angle) at $i^{th}$ element;
$\alpha_0$ = isolated $\alpha$ for zero lift;
$C_{mo}$ = isolated zero lift pitching moment.

SHOCK
WAVE

12

10

h

INTERCEPT
14

WEDGE PLATE

16

18

FIG.1

EP 0 335 045 A1

COMPUTER 84

46

BRIDGE NETWORK ___ 64

58

28

22

24

80

78

50    52

76

82

10

26

24

NORMAL
FORCE

FIG. 2

EP 0 335 045 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 217 536 (MOTSINGER et al.) * Column 4, lines 15-33; column 8, line 63 - column 9, line 6; figures 1,8 * | 1-8 | G 01 P 13/02 |
| X | US-A-2 855 779 (M. ZAID) * Column 1, lines 44-55; figures 1,2,5-7 * | 1,2,4,5,7 | |
| X | US-A-2 864 568 (IKARD et al.) * Column 2, lines 22-36; figures 1-3 * | 7 | |
| A | | 3,8 | |
| A | FR-A-2 476 322 (GUENIOT) * Page 2, lines 12-28; figure * | 1,2,4,5,7 | |

TECHNICAL FIELDS SEARCHED (Int. Cl.4)

G 01 P

The present search report has been drawn up for all claims

| Place of search | Date of completion of the search | Examiner |
|---|---|---|
| THE HAGUE | 06-02-1989 | HANSEN P. |